# EUROPEAN PATENT SPECIFICATION

(11) **EP 0 313 621 B1**
(45) Date of publication and mention of the grant of the patent: **03.02.1993**
(21) Application number: 88904226.3
(22) Date of filing: 03.05.1988
(51) Int. Cl.: F24F 1/02

(54) **VENTILATION MEANS AND VENTILATION PROCEDURE**
LÜFTUNGSMITTEL UND LÜFTUNGSVERFAHREN
DISPOSITIF ET PROCEDE DE VENTILATION

(30) Priority: 13.05.1987 FI 872122
(43) Date of publication of application: 03.05.1989
(73) Proprietor: INSINOORITOIMISTO RISTO CASTREN OY, SF-15950 Lahti (FI)
(72) Inventor: CASTREN, Risto, SF-15950 Lahti (FI)
(74) Representative: Tiedtke, Harro, Dipl.-Ing.
(86) International application number: FI8800067
(87) International publication number: WO8808944

(56) References cited:
- CH-A- 581 298
- CH-B- 515 462
- DE-A- 2 351 806
- DE-A- 2 644 907
- DE-B- 1 931 155
- DE-B- 2 020 468
- FI-B- 40 575
- SE-B- 422 708
- US-A- 2 442 963

## Description

The present invention concerns a ventilation method and a ventilation means according to the preamble of claims 1 and 2 respectively and as described for example in DE-A-2 644 907.

The ventilation means shown therein serve the heating/cooling of the room air, and for this purpose comprise a radial blower means which supplies air through an air intake duct to a heat exchanger and subsequently exhausts the same through an air exhaust duct. In apparatus of this type a supply of fresh outdoor air is not provided.

From the US-A-2 442 963 an air distributing unit is known which also serves to circulate the room air; therein perforations and nozzles are used to deviate the heated/cooled air flow, and to deviate the room air depending on the climate. A supply of fresh air cannot be gathered therefrom either.

It is the object underlying the invention to produce a ventilation method and means according to the preambles of the claims 1 and 2 in which the supply of fresh outdoor air can be ensured by simple means.

As set forth in the invention, this object is solved by the features in the characterizing portions of the claims 1 and 2.

According to the invention at least one induction pipe is provided through which a portion of the heated/cooled air is conducted. This portion of the air is supplied to a point adjacent to a fresh air intake duct into a fresh air intake chamber by means of the induction pipe, thereby attracting fresh outdoor air through the fresh air intake duct.

It has been understood in the present invention to form a ventilation means in which a heat transfer and filtering surface of circle-like configuration is used. The heat transfer liquid has been disposed to run in said heat transfer means, and with its aid the room air may be heated or cooled. As taught by the invention, it has been understood to draw directly fresh air into the room, making use of the room air circulation through the heat transfer and/or filtering equipment produced by the blower equipment and of the air flow branched off therefrom, by which the entrance of fresh air is induced. Therefore no very great vacuum is required in order to enable supply of fresh air into the room. According to the invention, it has been understood to place one heat transfer and/or filter circle on the delivery side of the blower, and according to the invention it has been understood to carry from said delivery side of the blower, through between the blower and the heat transfer and/or filter circle, a separate induction duct through which part of the room air circulation can be conducted to the purpose of inducing fresh air supply into the room space or removing a certain part thereof from the room air.

The invention is more closely described in the following, referring to certain advantageous embodiments of the invention, presented in the figures of the attached drawings, to which however the invention is not meant to be exclusively confined.

In Fig. 1A is presented, in principle and schematic presentation, the air circulation arrangement and the heat transfer liquid arrangement of the ventilation control means of the invention.

In Fig. 1B is presented an advantageous heat transfer liquid circulation arrangement in which complete counterflow principle is implemented with respect to the entering air flow.

In Fig. 1C is presented another heat transfer liquid circulation arrangement which is advantageous expressly as regards the pipeline constructions.

In Fig. 2 is presented, in axonometric projection, a ventilation means according to the invention, with the front cover removed.

In Fig. 3 is presented another embodiment of the ventilation means of the invention, wherein an air humidifying arrangement has been depicted. This presentation, too, is axonometric.

In Fig. 4 are presented the intake and exhaust ducts on the rear of the means. The presentation is axonometric.

In Fig. 5 is presented another advantageous embodiment of the ventilation means of the invention.

In Fig. 6A is presented the summertime setting of the ventilation means of the invention, in a schematic presentation, and in Fig. 6B is presented the wintertime setting of the ventilation means of the invention, likewise in schematic presentation.

In Fig. 7 is presented the use of the ventilation means of the invention in a liquid circulation system.

In Fig. 8 are presented the outlet tube and the fresh air inlet tube fitted to the means of the invention, and the disposing of said tube systems in conjunction with a ventilator opening to outdoor atmosphere.

In Fig. 9A is presented a heat tube fitted to the ventilation means of the invention.

In Fig. 9B is presented an ancillary apparatus fitted to the ventilation means of the invention, this being a lamp of sterilizing room air impurities.

In Fig. 9C is presented, fitted to the means of the invention as an ancillary apparatus, a safety device guarding the condensation water overflow basin.

In Fig. 9D is presented, fitted to the ventilation means of the invention, an additional air cooling apparatus.

In Fig. 9E is presented a controllable ventilation valve in the air chamber.

In Figs 10A and 10B is presented the ribbed tube used in the ventilation means of the invention, in cross sectional projection and in outside view, respectively.

In Fig. 11 is presented a third advantageous embodiment of the means of the invention, in schematic presentation.

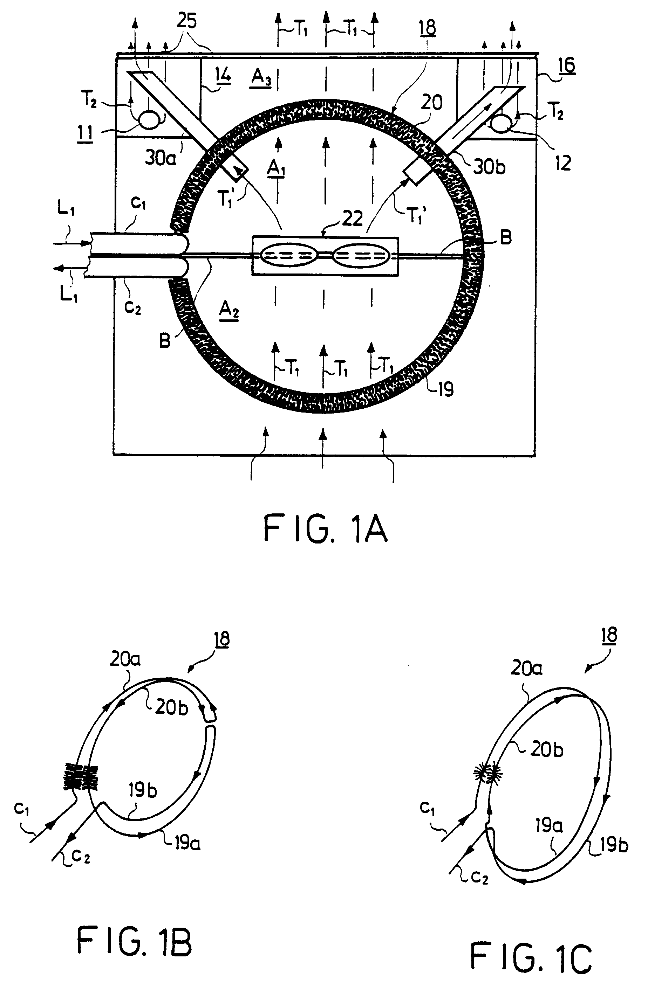

In Fig. 1A, a ventilation means according to the invention is depicted in a schematic, principle presentation. The ventilation means may be, most advantageously, installed in the room, on a wall below a window. The ventilation means 10 comprises at least one first fresh air intake duct, and the means of the invention comprises at least one room air exit duct. The means also comprises blower means or equivalent, by the aid of which the air in the room is circulated from the lower part of the room to its upper part and in such manner that the circulated air is transported through heat transfer and/or filtering surfaces, in which case said circulated air is either heated or cooled.

In the heat transfer means 18 a heat transfer liquid is circulated which releases heat to the room air, or alternatively it takes heat from the room and cools the room air. A blower 22 has been disposed, as taught by the invention, in the centre of the circularly arranged heat transfer surfaces, and the blower 22 has been arranged to draw air, first, through a first heat transfer circle 19 to the intake side A₂ of the blower, whence the air that has been warmed, or cooled, at the circle 19 is carried to the delivery side A₁ of the blower and thence further, through a second circle 20, further to the upper part A₃ of the ventilation means, and out. In addition, air is carried from the delivery side of the blower along a so-called induction duct 30 to a point adjacent to the fresh air duct 14, whereby the high-velocity air discharging from said induction duct attracts air from the fresh air duct, which is under lower pressure, and the air in said induction duct serves, in a way, as a carrier jet. The warmed, or cooled, air coming from the induction duct 30 mixes with the air coming from the fresh air duct, and therefore the air coming from outdoors is either heated or cooled. The intake and delivery sides of the blower are separated in the region defined by the heat transfer and/or filtering circles 19,20 by a partition B. Air is thus able to travel from the intake side to the delivery side of the blowers only through the blower apertures.

From the delivery side of the blower, the air may equally be conducted to a chamber from which is goes straight along the air exhaust duct, out from the means and from the room.

In the wintertime there is movement of warm air in the room by normal convection, up along the exhaust air flue and out from the building. The air removal through the other duct 16 of the ventilation means is not needed then, and said duct may be used merely as a second fresh air intake duct. In summer, owing to the high temperature of the outdoor air, there is no such natural air circulation through the exhaust air flues, and it is then to advantage to employ also air removal from the room, making use of the operation of the blowers incorporated in the ventilation means of the invention.

In Fig. 1B is depicted the heat transfer liquid circulation arrangement in the most advantageous embodiment of the invention. The heat transfer liquid is carried to the heat transfer means 18 through the duct C₁, and it is circulated through the first ribbed tube arc 20a and through the second ribbed tube arc 20b therewith connected, further through the ribbed tube arc 19a of the first circle, and thence through the parallel ribbed tube arc 19b and further along the duct C₂ and out. The circulation may be caused by a liquid circulation pump, and the liquid may be circulated through apparatus where the heat is recovered or in which heat is stored in general. The path of the air past the circles 19,20 is indicated with arrow T₁.

In Fig. 1C is presented another conceivable advantageous mode of heat transfer liquid circulation. The heat transfer liquid arrives by the input duct C₁ at the first ribbed tube arc 20a of the second heat transfer circle, goes from there immediately to the first ribbed tube arc 19a of the first heat transfer circle 19, and goes next in series to the second ribbed tube arc 19b of the first heat transfer circle 19 and thence further by the duct C₂ and out. The air is circulated through needle rib circles 19,20, and the blower has been disposed in the central area of the circles 19,20. The heat has been arranged to transfer either to the heat transfer liquid or from the heat transfer liquid to air, depending on the differential temperature between heat transfer liquid and air.

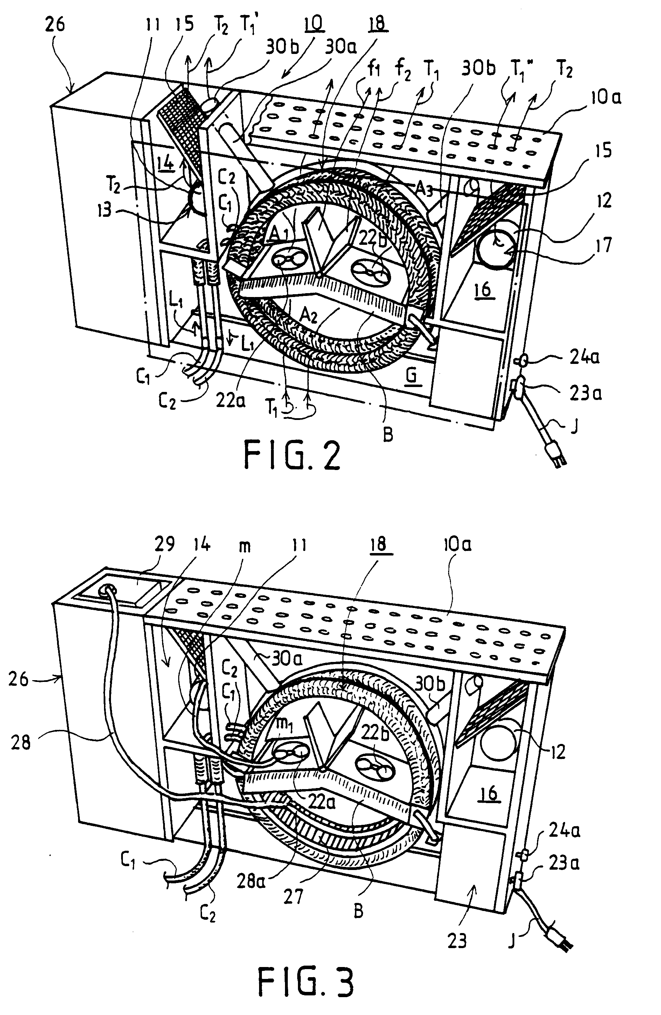

In the following, the means depicted in Figs 2-4 is more closely described. The front panel (indicated with dotted lines) has been removed. The ventilation means 10 of the invention comprises at least one fresh air intake duct 11 and at least one room air exhaust duct 12, which may also serve as a second fresh air intake duct. In the fresh air intake duct has been provided a fresh air entry valve 13, which advantageously is so adjustable that the incoming fresh air quantity can be controlled. Regulation is most advantageously manual.

The end of the fresh air intake duct 11 opens into a fresh air entry chamber 14 in the ventilation means 19, this chamber being most advantageously lined with a lining 14a for damping of the flow noise. In the fresh air entry chamber a fresh air intake filter 15 has been provided in oblique position.

The ventilation means 10 advantageously comprises also a second duct 12 connected with the ventilation means, which may alternatively serve as room air exhaust duct and as fresh air intake duct. In conjunction with said second duct 12 has also been provided a similar chamber 16 as in connection with the first duct 11, which may serve as exhaust chamber or as a second fresh air intake chamber. The exhaust duct 12 and/or intake duct 12 comprises a valve 17 regulating the flow, this valve being advantageously of similar kind as the valve 13 installed in conjunction with the intake chamber 14 and therein. Said valve 17 is also settable and adjustable, whereby it is possible by opening and closing said valve to regulate the flow rate through the duct 12. The task of chambers 14 and 16 is to serve as a kind of air locks. When cold air is being drawn in through them, the cold air cannot run downward as the chambers open upward. They also serve as a kind of separating spaces, whereby a temperature differential may be achieved between the chambers 14 and 16 when one of the two chambers is used as outgoing chamber for the air departing from the room. It is then possible to install e.g. a heat tube between the chambers. The chambers also serve as silencer chambers, and they serve us filtering chambers, in which case a filter may be installed in the space with wide cross section and the filter will not cause any appreciable air resistance e.g. to the fresh air which is made to flow in from outdoors. The chambers also prevent cold outdoor air from running down on the ribbed heating tube and they prevent freezing of the ribbed tube e.g. in the event that the circulation pump stops. The chambers comprise four side walls and a bottom, confining the chamber space. The upper part of the chambers is open or provided with a closing cover as presented in separate embodiments.

The ventilation means 10 comprises a heat transfer means 18 by the aid of which the air circulated through the ventilation means 10 can be heated or cooled. The heat transfer means 18 advantageously comprises a first, or lower, heat transfer and/or filtering circle 19 and a second, or upper, heat transfer and/or filtering circle 20. The second filtering circle comprises a first ribbed tube arc 20a and a second parallel ribbed tube arc 20b connected in series therewith. The second ribbed tube arc 20b is connected with its flow duct, further, to a third ribbed tube arc 19a, which is further connected to a fourth ribbed tube arc 19b. (Liquid circulation mode of Fig. 1B.) It is thus understood that the heat transfer liquid is carried, as indicated by arrow L₁, first in the first ribbed tube arc and thence in the second ribbed tube arc, and further in the third ribbed tube arc and further in the fourth rubbed tube arc, whence the liquid is further circulated out from the ventilation means 10. It is thus understood that the air entering the ventilation means 10 first meets the first heat transfer and/or filtering circle 19 and the ribbed tube arcs therein provided. The air goes into conjunction with the heat transfer and/or filtering circle 17 from the lower part Hₐ of the room space H through air ports G on the underside in the ventilation means 10. After said circle 19, the air meets the second, or upper, heat transfer and/or filtering circle 20. Thus, for instance when the air is being heated, the air to be heated first meets those heat transfer surfaces where the temperature of the circulated heat transfer liquid is lower and only thereafter it meets those ribbed tube arcs where the circulated liquid has a higher temperature. In this way the counterflow principle has been fully implemented and hereby possible heat transfer from the ribbed tube, from its heat transfer liquid, to the room air has been enabled, or in the case that the air is being cooled, best possible heat transfer from the room air to the heat transfer liquid which is made to flow in the ribbed tube.

The principal air circulation in the room space H is indicated with symbol and arrows T₁. The flow from the space A₁ to the room space, forced by over-pressure, or the so-called induction flow T₁', induces a flow coming through the fresh air duct, and causes this flow. Thus, no vacuum is required in the room space to accomplish an adequate incoming flow.

The first induction flow has been indicated with T₁ and the second induction flow with T₁'', and the flows have been indicated with arrows in the figures. In the space A₁,A₂, that is in the space defined by the needle-ribbed tube heat exchangers, has been disposed an air circulating means 22 producing the air circulation T₁, this means being advantageously a blower means and there being most advantageously two such blower means 22a and 22b. Said blowers, operating on electricity, are connected to the mains over a circuit breaker and/or controller 24. The control button 24a has been disposed on a side surface of the ventilation means. The controller 24 may effect stepless control of the blower. Switching on of the blower means 22 producing the air circulation takes place under control by a thermostat means 23. The control 23a of the thermostat is placed on a side surface of the ventilation means 10, and by means of the thermostat that temperature can be set at which the blower is switched on, or the thermostat controls the blower's speed of rotation. The desired room temperature can be set with the thermostat control knob 23a. Bordering on the space A₃ has been provided another filter 25, which filters the air circulated in the room space with the aid of the blower 22. The filter 25 is advantageously an electric filter, and it has been placed below the top cover plate 10a. The filter 25 is advantageously placed both above the area A₃ and above the fresh air intake chamber 14, whereby both the circulating air T₁ of the forced convection in the room and the fresh air T₂ entering the room is filtered. The electric connection has been indicated with J. In the embodiment of Figs 2 and 3, damper flaps f₁ and f₂ closing by action of the blow pressure from blowers 22a and 22b have been shown. When the blowers are inactive, these dampers cut the intake and delivery areas of the blowers off from each other.

The ventilation means 10 of the invention comprises, in addition, a room air humidifier 26. The humidifier 26 comprises a humidifying and filtering surface 27 to which water for humidifying the room air is conducted from a water tank 29 or equivalent, adjustable in height, through a water supply pipe 28 and through its holes 28a. The water supply can thus be adjusted. Advantageously, the water humidifying the room air is carried expressly to the top surface 19c of the lower, or first, heat transfer circle or to a humidifying and filtering surface 27 disposed adjacent thereto. Said warm surface rapidly evaporates the liquid supplied to the humidifying surface 27 and it becomes bound in the room air, drawn by the blower 22.

In Fig. 3 has furthermore been depicted an additional tube (m) leading to and opening into the air chamber 14. Its other end (m₁) opens onto the periphery of the blower 22. When the blade of the blower moves past the end (m₁) of the tube, it causes a vacuum pulse in the chamber 14. By this means the supply of fresh air is promoted.

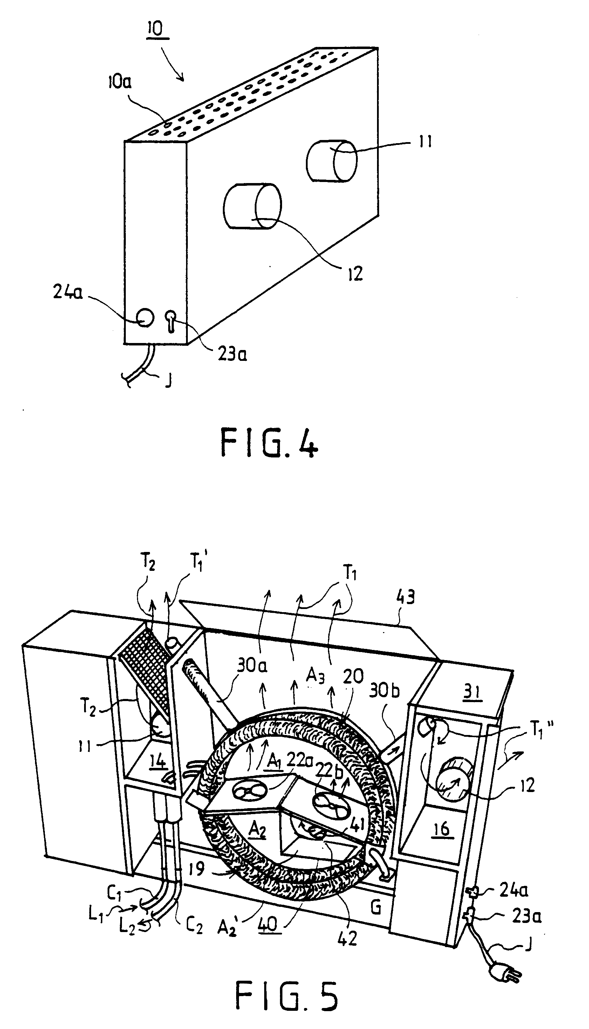

In Fig. 5 is presented another advantageous embodiment of the means of the invention. The means comprises an additional wall 40 which separates a space A₂ʼ from the rest of space A₂. The space A₂ʼ communicates by an openable and closable aperture 41 directly with the room space. Therefore the adjustable partition 40 enables circulation of the air in the room with the aid of fans from the room space, from the lower part Ha of the room to the space A₂' and thence to the delivery side of the blower into the space A₁ and thence further to the chamber 30 through the duct 30b, and further out from the room. Said apparatus arrangement is advantageous particularly in the summertime operation when room air is removed from the room through the duct 12. It affords then the advantage that the portion of the room air that is to be removed is neither heated nor cooled: it is removed as it is, directly out through the duct 12 at a temperature equalling the room air temperature. In this embodiment the room air does not have to go through the first heat transfer and filtering circle 12; instead, it by-passes said circle by the aid of the by-pass aperture 41 and is thus directed straight to the exhaust. The aperture 41 may be provided with an openable and closable cover 42.

In the upper part of the means, in the embodiment of Fig. 5, above the area A₃ and before the filters, if any, has been placed a separate damper 43 which when the blower is in operation opens by air pressure effect and admits the flow into the room space. When the fans are switched off, e.g. through action of the thermostats, the damper 43 is closed and e.g. the convection air flow has no direct access from the space A₃ into the room: the air which is further warmed in the circle 19,20 is compelled to go through the ducts 30 to the adjacency of the air chambers. A certain amount of convection air then goes through the duct 30 and goes to heat cold air coming from the fresh air duct, even when the fan is not switched on. The damper 43 of Fig. 5 is also well applicable in the embodiment of Figs 2 and 3.

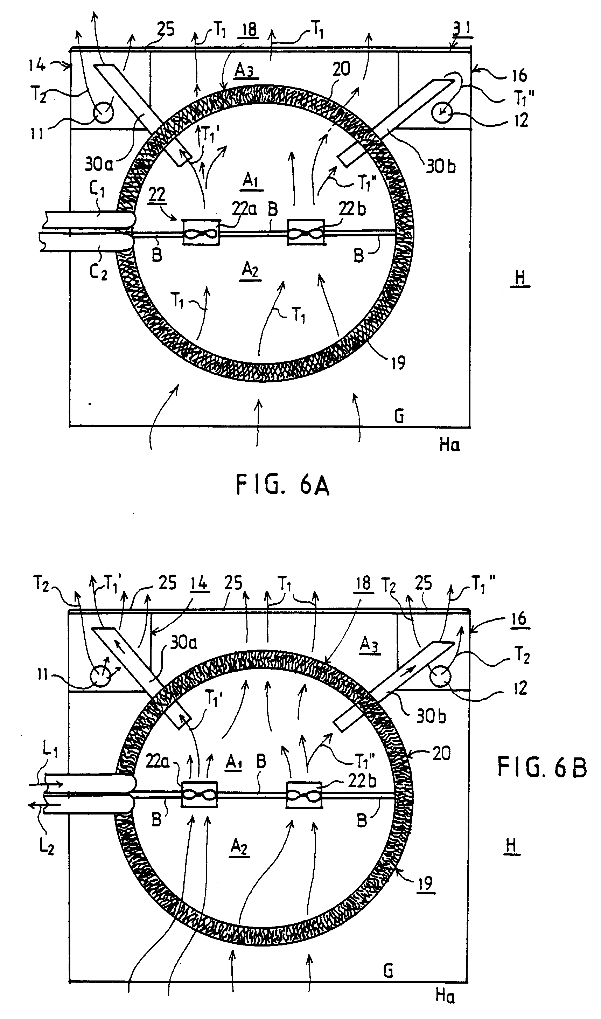

In Fig. 6A is more closely presented the summertime position of the ventilation means of the invention. Heat transfer liquid is made to flow as indicated by arrow L₁ through the ribbed tubes. The heat transfer liquid may have an under-temperature relative to the room air, and the heat transfer liquid has been arranged to take up heat from the room air and thus to cool the room air in the summer, or said circulation L₁ may be switched off. Of course, opposite passage of heat is equally possible. The means is able to operate as air cooler as well as air warmer.

In the summertime there is no gravity-induced ventilation, i.e., ventilation which is based on the descent of cold air and ascent of warm air. Therefore air has to be removed from the room and air must be supplied. Supply of fresh air is in the ventilation means 10 of the invention through the fresh air supply duct 11. The blower means 22, that is the first blower means 22a and the second blower means 22b, have been disposed to rotate a propeller blade and to draw air from the intake side A₂ through the ribbed tubes and circle 19 to the delivery side A₁. The air resistance on the delivery side A₁ consists of the second circle construction 20, and in this instance part of the air (T₁ʼ) is carried through the induction duct 30 to a point above the mouth aperture 11 of the fresh air supply duct and thus above the fresh air entry chamber 14. The induction flow duct 30 terminates at the induction nozzles 30a, where the velocity of the induction flow is increased so that it draws air according to the ejector principle from the entry chamber 14 and there is thus no need of any appreciable vacuum in the room for implementing the fresh air supply flow.

The fresh air supply duct 11 does not comprise any separate filters inside itself which would constitute a resistance to the incoming flow. Neither does the use of an entry chamber, as taught by the invention, and of a filter 15 with extensive surface therein constitute any appreciable resistance to the air flow. Therefore the fresh air is able, thanks to the induction flow, easily to be mixed with the heated or cooled room air that is made to flow through the blower. From the delivery side A₁, part of the air flow is blown through the ribbed tube walls of the second heat transfer circle 20 to the space A₃ and thence further into the room space through a filter, advantageously an electric filter.

It is advantageous in the summertime if part of the room air is removed from the room space, and in that case a closing damper 31 is provided above the second air chamber 16, whereby the air has no other choice of path out from the chamber 16 but that through the room air removal duct 12. In Fig. 5A is presented the principal air circulation, with arrows T₁. In the room space, the air is made to flow with the aid of the flow produced by the fans, from the lower part Hₐ of the room through the first row of ribbed tubes or through the ribbed tube circle 19 to the intake side A₂ of the blower, thence to the delivery side A₁ of the blower and further to the space A₃, and further through the filter out through the upper part of the means. Similarly, part of the flow goes, in the way already presented in the foregoing, from the space A₁ along the induction flow duct 30 to a point above the entry chamber 14 of the fresh air supply duct, where the warmed or cooled air is mixed with fresh and filtered air T₂ that has come through the fresh air supply duct 11. Said induction flow is indicated by arrows T₁'. The supply of fresh air is indicated with T₂. The figure shows how the fresh air and the air transported by the fans through the heat transfer walls 19,20 are mixed.

From the space A₁, part of the induction flow goes through the second induction duct 30b to the second air chamber 16, and since in the summertime setting the upper part of the air chamber 16 is closed by the damper 31, the air goes by effect of the pressure generated by the blower 22, by the duct 12 and further out from the room space.

It is thus understood that in this design air present in the room space is circulated (arrow T₁) by the circulation which the fan means produce and at the same time part of said circulation flow (T₁') is branched off to induce an incoming air flow (T₂) along the fresh air duct and, thirdly, part of the room air (T₁'') is removed by the circulation caused by the fan 22 or equivalent, through the second induction duct 30b, said air portion going from the duct, first, to the chamber 16, whence it goes further through the duct 12 out from the room. The precondition in this case is that the upper part of the chamber 16 is closed with the damper 31 or equivalent.

In Fig. 6B is presented the winter setting of the ventilation means of the invention. The summer setting differs from the winter setting in that in the latter air is drawn both through duct 11 and through duct 12 and that now the closing damper 31 has not been set to close said upper part of the chamber 16, and that now also the induction duct 30b terminates in the upper part of the chamber 16 and by means of said air discharging from the induction flow duct 30b is induced, according to the ejector principle, fresh air into the room space through the duct 12, similarly as was the case regarding the intake duct 11.

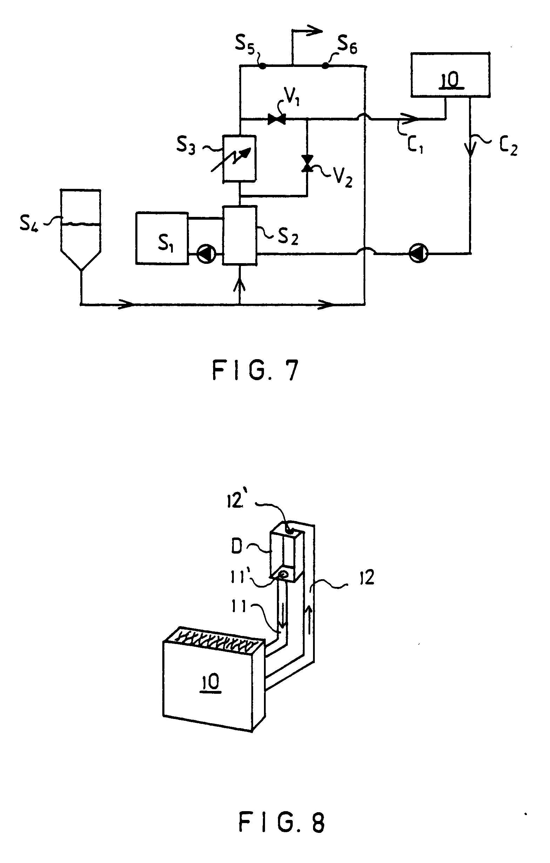

In Fig. 7 is shown the use of the ventilation means of the invention in a liquid circulation system. The means of the invention may be connected from the incoming and outgoing branches C₁ and C₂ of the ribbed tubes with a radiator system, or most advantageously said connection may be carried out by using in the building in question merely a one-water system. In that case the apparatus according to the present invention is included in the warm water circulation circuit of the flat.

In Fig. 7 is presented the way of connecting the means of the invention expressly into a one-water system. One may then advantageously employ two warm water accumulators, in which case it is possible, by operating the valves V₁ and V₂, to circulate water either through a lower-temperature tank serving as heat recovery element or liquid at higher temperature may be taken into said apparatus circulation through the upper branch, according to heating requirements. In the figure, S₁ indicates a heat pump. Heat is transferred to the heat recovery tank S₂. The heating of household water proper takes place in the superheating tank S₃. From the city water reservoir S₄ or equivalent, the household water is conducted to the heat recovery tank S₂ and by a separate branch directly to the cold water tap S₄. From the tank S₃, the heated household water is conducted to the warm water tap S₅. From the connection between the warm water tap S₅ and the superheating tank S₃ is provided a connector to the ventilation means of the invention by the incoming conduit C₁. The valve V₁ has been inserted in the incoming line C₁, and in the superheating tank by-pass line has been fitted a valve V₂. Said valves are used to control the passage and temperature of the water coming to the means 10. The outgoing line C₂ contains a circulation pump, and the outgoing line C₂ is connected to the heat recovery tank S₂.

The means of the invention is eminently suitable for use expressly in one-water systems and expressly in those systems which have been adapted to use directly the mains pressures of waterworks and their water. The apparatus according to the invention requires no thermostat valves nor any other controls susceptible to blocking as have been required heretofore in water heating systems. The means of the invention also requires no high temperatures: owing to the favourable heat transfer properties afforded by the ribbed tube, even minor temperature differentials suffice to guarantee heat transfer with good efficiency. Therefore the means of the invention is eminently suitable for use in low temperature systems.

There are other alternatives as to connecting the ribbed tubes of the ventilation means of the invention into an operating system. It is possible to use electric heating in the system, in which case thermal energy is carried through a heat exchanger to the heat transfer liquid in the pipe system of the means 10.

Natural gas may equally be used for heating the liquid, or said heating may be accomplished with oil.

In Fig. 8 is presented the connecting of the air ducts of the means of the invention with the wall structures in such a way that no separate insertions will protrude from the wall. The ducts 12 and 16 of the ventilation means 10 have been connected, as taught by the invention, with a ventilator D in the room space and openable outward, in such manner that the end of the air flow intake duct 11' has been connected to the lower part of the ventilator E and the end of the air flow exhaust duct 12' has been connected to the upper part of the ventilator E. Through the lower duct fresh supply air is drawn in, and through the upper duct air at higher temperature is removed, which immediately on being released rises to greater height, and there is no chance for the air removed from the room space to be mixed with the air that is drawn into the room.

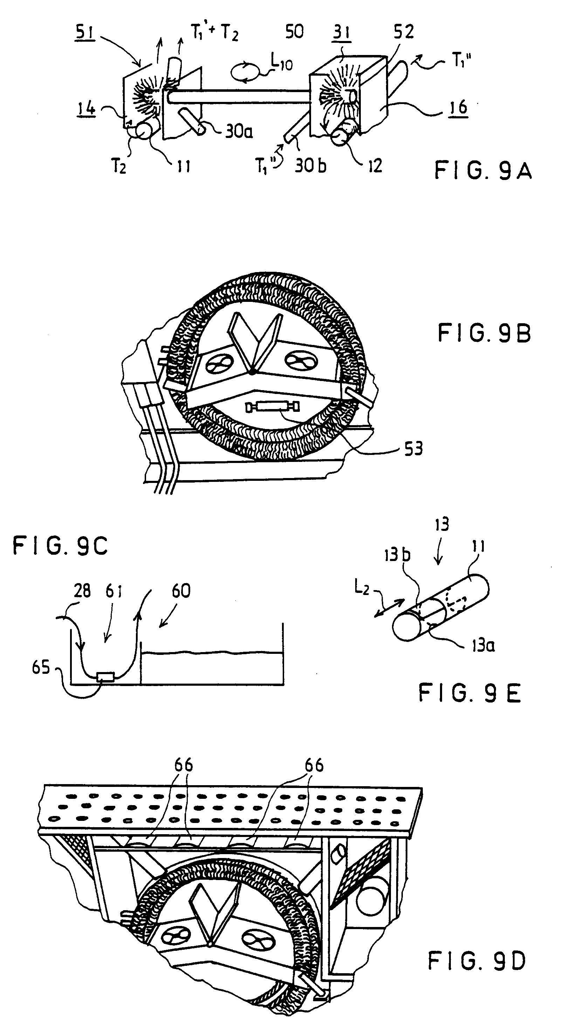

In Fig. 9A is presented a heat tube 50 fitted to the means of the invention. The tube 50 contains heat transfer liquid, and the heat transfer liquid takes from the exhaust air the heat, evaporates and goes to the other end of the tube where the colder incoming air cools the evaporated liquid and this liquid imparts its latent heat of evaporation to the colder fresh air that is being drawn in.

The heat tube may comprise at both ends needle-like ribs, and heat transfer liquid is enclosed in the tube. The needle-like ribbed portions 51 and 52 of the tube 50 are disposed to be located in the air chambers 14 and 16. Then, when room air is being removed, the heat is transferred from the exhaust air through the heat tube of the invention and in such manner that the heat goes from the exhaust chamber 16 to the fresh air entry chamber 14, and the heat transfer liquid that has evaporated in the chamber 16 within the heat tube imparts its latent heat to the fresh air, and therefore the fresh air is warmed up. Up to 40-50% of the thermal energy required for heating in the ventilation process can be derived from the exhaust air with the aid of the heat tube. The heat tube is connectable in separate grooves in the body of the ventilation means, and it may be a separate ancillary piece of equipment to the ventilation means. The needle-like ribbed portions of the needle heat tube present good conductance even at low velocities (0.2 m/s), and the pressure drop on the air is low (about 5-10 Pa).

In Fig. 9B is presented a sterilizing lamp 53 employed in the means of the invention, which has been disposed in the central area of the heat transfer circles, advantageously in the area A₂.

The lamp may from time to time produce ultraviolet radiation which destroys the air impurities, e.g. bacteria, present in the space A₂ and partly also those in the space A₁. Since the lamp has been placed to be well shielded from sight, the use of such a lamp causes no separate detriments; the light stays within the apparatus. The lamp may be activated at given desired intervals,

In Fig. 9C is presented a piece of ancillary equipment fitted to the ventilation means of the invention. In the figure is shown a condensate basin 60 which has been disposed to be located below the lower ribbed tubes and in which the condensed water accumulates. The basin comprises on one end a so-called safety basin 61. The water supply pipe to the air humidifying apparatus has been arranged to pass through the safety basin 61, through a valve 65. When water enters the safety basin part, the valve 65 expands and inhibits the airhumidifying liquid flow coming from the liquid tank.

In Fig. 90 are presented ancillary elements 66 for chemically bound heat, attached to the means of the invention. The cooling units have been placed in the upper part of the area A, and they have been disposed to cool the circulating air T₁ in the room. The circulating air of the room H has been arranged to impart heat to the cooling units.

In Fig. 9E is presented an advantageous embodiment of the air flow intake valve 13 (and/or 17). The valve part 13a is adjustable (arrow L₂) on the end of the intake duct 11. The intake aperture 13b of the part 13a can therefore be enlarged and reduced, depending on the desired amount of air.

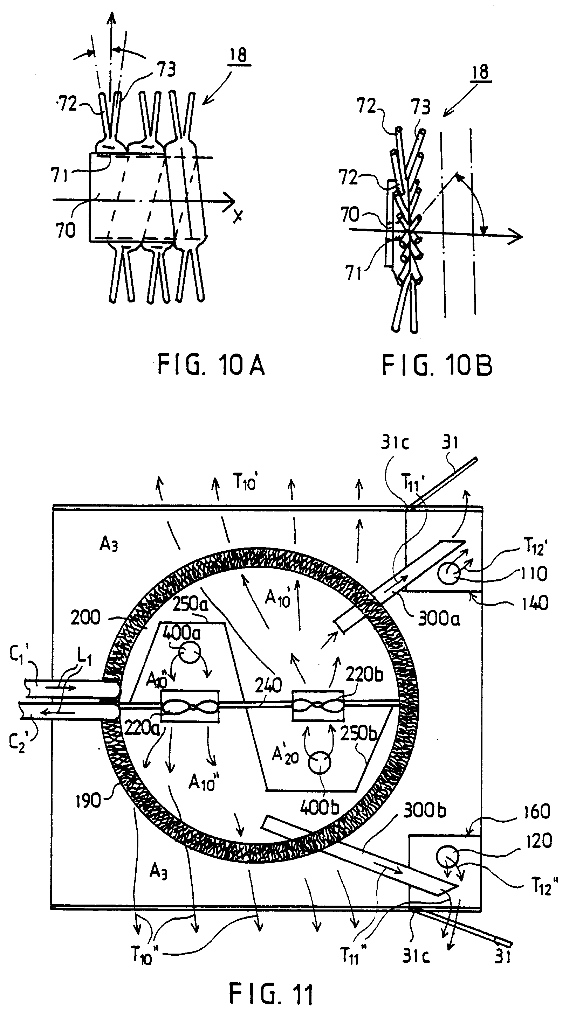

In Figs 10A and 10B is presented the needle ribbed tube employed in the means of the invention, cross-section and in outside view. The heat transfer means 18 is most advantageously formed of a needle ribbed tube, comprising a ribbon structure 71, comprising needle-like ribs 72, wound upon a central tube containing heat transfer liquid. The ribbed tube comprising needle-like ribs is shown in Fig. 10 as viewed from the outside end in partial presentation.

In Fig. 11 is presented a third advantageous embodiment of the means of the invention, schematically and with the front cover removed. The means of this embodiment can be conveniently installed on the ceiling of the room space. In the embodiment of the figure, the means comprises a first heat transfer and/or filter circle 200 and a second heat transfer and/or filtering circle 190. Between said heat transfer and/or filtering circles, a first blower 220a and a second blower 220b have been installed. The blowers have been disposed in a partition 240 provided in the interior area defined by the circles 200 and 190. Closest to the circle 200 is the air entry aperture 400a. The wall structure 250a has been disposed to delimit an area A₂₀'' on the intake side of the blower 220a. It is enabled with the aid of said wall 220a that nothing but room air coming from the duct 400a will pass through the blower 220a. The room air goes from the intake side A₂₀'' of the blower 220a to the delivery side A₁₀'' of the blower 220a. From here, the air goes through the walls of the heat transfer and/or filter structure 190, via the area A₃ of the means, as indicated by arrows T₁₀'' into the room space and branches off to the induction duct 300b, whence the air goes to the air chamber 160, where a duct 120 opening outdoors is provided. The air chamber 160 is provided with an openable and closable cover 31, which could be provided with hinge means 31c. When the cover 31 closes the air chamber 160, air is removed from the space A₁₀'' through the duct 300b, the air going from the duct 300b to the duct 120, and out. In Fig. 11 is presented an embodiment in which the cover 31 is open and the air induces along with itself air coming from outdoors through the duct 120, the duct 120 communicating with outdoor air. That part of the air which does not pass through the duct 300b goes through the heat transfer and/or filtering circle 190 into the room.

The mode of operation of the blower 220b is equivalent to that of the blower 220a. The intake side of the blower 220b is now located on the opposite side of the partition 240 to the intake side of the blower 220a. In the area A₂₀' delimited by the wall structure 250b is located a duct aperture 400b opening into the room space and through which air is drawn from the room space with the blower 220 to the delivery side A₁₀' of the blower, whence the air is transported through the heat transfer and/or filtering wall 255 and through the area A₃ into the room space as indicated by arrow T₁₀', and through the tube 300a into the air chamber 140. As shown in the figures, when the air chamber is open with the cover 31 in the open position, the room air coming through the duct 300a goes to the chamber 140 and further out into the room space. Said flow attracts fresh air coming through the duct 110, the duct 110 opening to the outdoor atmosphere. The fresh air has been indicated with arrows T₁₂'. When the cover 31 is closed, room air is removed through the duct 300a and 110a.

## Claims

1. A method of ventilation wherein the suction effect of air coming from an induction duct (30) is utilized in order to achieve circulation of other air, **comprising** the steps of;
- using an air circulation means (22a, 22b, 220a, 220b) to circulate room air through a heat transfer means (18, 19, 20, 190, 200) thereby heating or cooling the air;
- separating off part of said circulated heated/cooled room air from the delivery side of said air circulation means;
- causing said separated off air to flow through at least one induction pipe (30) into a fresh air intake chamber (14) to a point adjacent to a fresh air intake duct (11, 12; 110, 120) thereby attracting fresh outdoor air to come through said fresh air intake duct (11, 12; 110, 120) to mix with said room air in said intake chamber (14);
- causing said mixed air to enter the room space to be ventilated.

2. Ventilation means for carrying out a method as claimed in claim 1, comprising an air circulation means (22a, 22b; 220a, 220b) being disposed in a space defined within a heat transfer means (18, 19, 20; 190, 200), said air circulation means (22a, 22b; 220a, 220b) transporting heated/cooled air through said heat transfer means (10, 19, 20; 190, 200), and into the room space through at least one room air exit duct, **characterized** in that part of the heated/cooled air is supplied from the delivery side of said air circulation means (22a, 22b; 220a, 220b) through at least one induction pipe (30a, 30b; 300a, 300b) into a fresh air intake chamber (14) to a point adjacent to a fresh air intake duct (11, 12; 110, 120) thereby attracting fresh outdoor air to come through said fresh air intake duct (11, 12; 110, 120) and mix with said room air in the intake chamber (14).

3. A ventilation means according to claim 2, **characterized in** that said fresh air intake chamber (14) opens upwards and said induction pipe (30a, 30b; 300a, 300b) is disposed such that it terminates in said fresh air intake chamber (14) or adjacent thereto.

4. A ventilation means according to claim 2 or 3, **characterized in** that the means comprises a second chamber (16) and a second duct (12), said chamber (16) communicating with outdoor air through said second duct (12) and said second chamber being openable and closable by means of a separate closing means, advantageously a closing damper (31) for conducting the air either from outdoors into the chamber (16) and thence further into the room space or for conducting the air from the delivery side of said air circulation means (22a, 22b; 220a, 220b) to the chamber (16) and further to said second duct (12) and from said second duct further out.

5. A ventilation means according to claim 4, **characterized in** that said chamber (14; 16) is provided with an air filter (15).

6. A ventilation means according to claim 4 or 5, **characterized in** that said intake duct (11; 12) is provided with a valve (13; 17) for controlling the room air quantity coming to said ventilation means (10) and/or departing therefrom.

7. A ventilation means according to any one of claims 2 to 6, **characterized in** that said air circulation means (22a, 22b, 220a, 220b) produces air circulation, advantageously by a blower.

8. A ventilation means according to any one of claims 2 to 7, **characterized in** that said heat transfer means (18, 19, 20, 190, 200) is separated in a lower or first heat transfer means (19, 190) and an upper or second heat transfer means (20, 200) and that said heat transfer means (18, 19, 20, 190, 200) comprises filtering means.

9. A ventilation means according to claim 7 or 8, **characterized in** that the means comprises a thermostat which is controllable to switch the blower or equivalent on or which has been arranged to control the speed of rotation of the blower having received its control from the room temperature.

10. A ventilation means according to any one of the preceding claims 2 to 9, **characterized in** that a heat transfer liquid is transported through said heat transfer means (18, 19, 20; 190, 200), said heat transfer means being provided with an incoming conduit and an outgoing conduit and the heat transfer liquid being circulated (arrow L₁) through said heat transfer means (18, 19, 20; 190, 200), wherein the heat transfer liquid circulated in said heat transfer means in its tube system either imparts thermal energy to the air of the room space, i.e. heats it, or takes up thermal energy from the air of the room space and thus cools said air.

11. A ventilation means according to any one of the preceding claims 2 to 10, **characterized in** that on the intake side of said air circulation means (22a, 22b, 220a, 220b) an aperture (41) is provided through which room air can be circulated by-passing said heat transfer means (18, 19, 20; 190, 200).

12. A ventilation means according to claims 10 or 11, **characterized in** that water from the warm water system of the household or water from the radiator system of the household is used as a heat transfer liquid.

13. A ventilation means according any one of the claims 2 to 12, **characterized in** that the means comprises a room air humidifier (26) including a water tank (29), a water supply pipe (28) and a filtering surface (27) disposed adjacent to said heat transfer means.

14. A ventilation means according any one of the claims 2 to 13, **characterized in** that the means comprises a sterilizing lamp (53).

15. A ventilation means according any one of the claims 4 to 14, **characterized in** that the means comprises a heat tube (50) containing a heat transfer liquid for transferring a part of the thermal energy of the air in the second chamber (16) to the air in the first chamber (14).

16. A method according to claim 1, **characterized in** that a part of said air from the delivery side of said air circulation means (22a, 22b, 220a, 220b) is separated to go directly out of the room space.

## Patentansprüche

1. Lüftungsverfahren, bei dem der Saugeffekt von Luft, die aus einem Ansaugkanal (30) kommt, ausgenutzt wird, um eine Umwälzung von anderer Luft zu erreichen, mit den folgenden Schritten:
- Verwenden einer Luftumwälzeinrichtung (22a, 22b, 220a, 220b) zum Umwälzen von Raumluft durch eine Wärmeübertragungseinrichtung (18, 19, 20, 190, 200), um auf diese Weise die Luft zu erhitzen oder zu kühlen;
- Abtrennen eines Teiles der umgewälzten erhitzten/ gekühlten Raumluft von der Auslaßseite der Luftumwälzeinrichtung;
- Strömenlassen der abgetrennten Luft durch mindestens ein Ansaugrohr (30) in eine Frischlufteinlaßkammer (14) bis zu einem Punkt benachbart zu einem Frischlufteinlaßkanal (11, 12; 110, 120), um auf diese Weise Luft anzusaugen, so daß diese durch den Frischlufteinlaßkanal (11, 12; 110, 120) strömt und sich mit der Raumluft in der Einlaßkammer (14) vermischt;
- Bewirken, daß die vermischte Luft in den zu lüftenden Raum eindringt.

2. Lüftungseinrichtung zur Duchführung eines Verfahrens nach Anspruch 1 mit einer Luftumwälzeinrichtung (22a, 22b; 220a, 220b), die in einem Raum innerhalb einer Wärmeübertragungseinrichtung (18, 19, 20; 190, 200) angeordnet ist und erhitzte/gekühlte Luft durch die Wärmeübertragungseinrichtung (18, 19, 20; 190, 200) und in den Raum durch mindestens einen Raumluftauslaßkanal fördert, dadurch gekennzeichnet, daß ein Teil der erhitzten/gekühlten Luft von der Auslaßseite der Luftumwälzeinrichtung (22a, 22b; 220a, 220b) durch mindestens ein Ansaugrohr (30a, 30b; 300a, 300b) in eine Frischlufteinlaßkammer (14) bis zu einem Punkt benachbart zu einem Frischlufteinlaßkanal (11, 12; 110, 120) geführt wird, um auf diese Weise frische Außenluft anzusaugen, so daß diese durch den Frischlufteinlaßkanal (11, 12; 110, 120) dringt und sich in der Einlaßkammer (14) mit der Raumluft vermischt.

3. Lüftungseinrichtung nach Anspruch 2, dadurch gekennzeichnet, daß sich die Frischlufteinlaßkammer (14) nach oben öffnet und daß das Ansaugrohr (30a, 30b; 300a, 300b) derart angeordnet ist, daß es in der Frischlufteinlaßkammer (14) oder benachbart dazu endet.

4. Lüftungseinrichtung nach Anspruch 2 oder 3, dadurch gekennzeichnet, daß sie eine zweite Kammer (16) und einen zweiten Kanal (12) umfaßt und daß die zweite Kammer (16) durch den zweiten Kanal (12) mit Außenluft in Verbindung steht und mit Hilfe einer separaten Verschlußeinrichtung, bei der es sich vorzugsweise um einen Sperrschieber (31) handelt, öffenbar und verschließbar ist, um die Luft entweder von außen in die Kammer (16) und dann weiter in den Raum zu leiten oder die Luft von der Auslaßseite der Luftumwälzeinrichtung (22a, 22b; 220a, 220b) zur Kammer (16) und weiter zum zweiten Kanal (12) und vom zweiten Kanal weiter nach außen zu führen.

5. Lüftungseinrichtung nach Anspruch 4, dadurch gekennzeichnet, daß die Kammer (14; 16) mit einem Luftfilter (15) versehen ist.

6. Lüftungseinrichtung nach Anspruch 4 oder 5, dadurch gekennzeichnet, daß der Einlaßkanal (11, 12) mit einem Ventil (13; 17) zum Steuern der Raumluftmenge, die von der Lüftungseinrichtung (10) kommt und/oder davon abgeführt wird, versehen ist.

7. Lüftungseinrichtung nach einem der Ansprüche 2 bis 6, dadurch gekennzeichnet, daß die Luftumwälzeinrichtung (22a, 22b, 220a, 220b) die Luftumwälzung vorzugsweise mit einem Gebläse erzeugt.

8. Lüftungseinrichtung nach einem der Ansprüche 2 bis 7, dadurch gekennzeichnet, daß die Wärmeübertragungseinrichtung (18, 19, 20, 190, 200) in eine untere oder erste Wärmeübertragungseinrichtung (19, 120) und eine obere oder zweite Wärmeübertragungseinrichtung (20, 200) unterteilt ist und eine Filtereinrichtung umfaßt.

9. Lüftungseinrichtung nach Anspruch 7 oder 8, dadurch gekennzeichnet, daß die Einrichtung einen Thermostaten aufweist, der steuerbar ist, um das Gebläse oder eine äquivalente Einrichtung einzuschalten, oder der die Drehzahl des Gebläses in Abhängigkeit von der Raumtemperatur steuert.

10. Lüftungseinrichtung nach einem der vorangehenden Ansprüche 2 bis 9, dadurch gekennzeichnet, daß die Wärmeübertragungsflüssigkeit durch die Wärmeübertragungseinrichtung (18, 19, 20; 190, 200) gefördert wird und daß die Wärmeübertragungseinrichtung mit einer ankommenden Leitung und mit einer abgehenden Leitung versehen ist, wobei die Wärmeübertragungsflüssigkeit durch die Wärmeübertragungseinrichtung (18, 19, 20; 190, 200) umgewälzt wird (Pfeil L₁) und wobei die im Rohrsystem der Wärmeübertragungseinrichtung umgewälzte Wärmeübertragungsflüssigkeit entweder die Luft des Raumes mit thermischer Energie beaufschlagt, d.h. diese erhitzt, oder von der Luft des Raumes thermische Energie abzieht und diese kühlt.

11. Lüftungseinrichtung nach einem der vorangehenden Ansprüche 2 bis 10, dadurch gekennzeichnet, daß an der Einlaßseite der Luftumwälzeinrichtung (22a, 22b, 220a, 220b) eine Öffnung (41) vorgesehen ist, durch die Raumluft unter Umgehung der Wärmeübertragungseinrichtung (18, 19, 20; 190, 200) umgewälzt werden kann.

12. Lüftungseinrichtung nach Anspruch 10 oder 11, dadurch gekennzeichnet, daß Wasser vom Warmwassersystem des Haushalts oder Wasser vom Radiatorsystem des Haushalts als Wärmeübertragungsflüssigkeit verwendet wird.

13. Lüftungseinrichtung nach einem der Ansprüche 2 bis 12, dadurch gekennzeichnet, daß sie einen Raumluftbefeuchter (26) umfaßt, der einen Wassertank (29), ein Wasserversorgungsrohr (28) und eine Filterfläche (27), die benachbart zur Wärmeübertragungseinrichtung angeordnet ist, aufweist.

14. Lüftungseinrichtung nach einem der Ansprüche 2 bis 13, dadurch gekennzeichnet, daß sie eine Sterilisationslampe (53) umfaßt.

15. Lüftungseinrichtung nach einem der Ansprüche 4 bis 14, dadurch gekennzeichnet, daß sie ein Heizrohr (50) aufweist, das eine Wärmeübertragungsflüssigkeit zur Übertragung eines Teiles der thermischen Energie der Luft in der zweiten Kammer (16) auf die Luft in der ersten Kammer (14) enthält.

16. Verfahren nach Anspruch 1, dadurch gekennzeichnet, daß ein Teil der Luft von der Auslaßseite der Luftumwälzeinrichtung (22a, 22b, 220a, 220b) abgetrennt wird, um direkt aus dem Raum herausgeführt zu werden.

## Revendications

1. Procédé de ventilation dans lequel l'effet d'aspiration de l'air provenant d'un conduit d'induction (30) est utilisé pour obtenir la circulation d'un autre air, comprenant les étapes consistant à:
- utiliser des moyens de circulation d'air (22a, 22b; 220a, 220b) pour faire circuler l'air de la pièce par des moyens de transfert de chaleur (18, 19, 20; 190, 200) et chauffer ou refroidir cet air;
- séparer une partie de l'air chauffé/refroidi qui circule dans la pièce du côté refoulement desdits moyens de circulation d'air;
- faire s'écouler cet air séparé par au moins un tube d'induction (30) dans une chambre d'admission d'air frais (14) en un point adjacent au conduit d'admission d'air frais (11, 12; 110, 120), aspirant ainsi l'air frais de l'extérieur de façon qu'il passe par ledit conduit d'admission d'air frais (11, 12; 110, 120) pour se mélanger avec l'air de la pièce dans ladite chambre d'admission (14);
- faire pénétrer cet air mélangé dans l'espace de la pièce à ventiler.

2. Dispositif de ventilation pour la mise en oeuvre du procédé selon la revendication 1, comprenant des moyens de circulation d'air (22a, 22b; 220a, 220b) qui sont disposés dans un espace défini dans des moyens de transfert de chaleur (18, 19; 20, 190, 200), lesdits moyens de circulation d'air (22a, 22b; 220a, 220b) transportant l'air chauffé/refroidi par lesdits moyens de transfert de chaleur (18, 19; 20, 190, 200) et dans l'espace de la pièce en passant par au moins un conduit de sortie d'air de la pièce, caractérisé en ce qu'une partie de l'air chauffé/refroidi est envoyée du côté refoulement desdits moyens de circulation d'air (22a, 22b; 220a, 220b) par au moins un tuyau d'induction (30a, 30b; 300a, 300b) dans une chambre d'admission d'air frais (14) en un point adjacent à un conduit d'admission d'air frais (11, 12; 110, 120), aspirant ainsi l'air frais de l'extérieur par ledit conduit d'admission d'air frais (11, 12; 110, 120) pour qu'il passe par ledit conduit d'admission d'air frais (11, 12; 110, 120) et qu'il se mélange avec l'air de la pièce dans la chambre d'admission (14).

3. Dispositif de ventilation selon la revendication 2, caractérisé en ce que ladite chambre d'admission d'air frais (14) s'ouvre vers le haut et ledit tube d'induction (30a, 30b; 300a, 300b) est disposé de manière à se terminer dans ladite chambre d'admission d'air frais (14) ou à proximité de celle-ci.

4. Dispositif de ventilation selon la revendication 2 ou 3, caractérisé en ce que le dispositif comprend une seconde chambre (16) et un second conduit (12), cette chambre (16) communiquant avec l'air de l'extérieur par ledit second conduit (12) et ladite seconde chambre pouvant être ouverte ou fermée par un moyen de fermeture séparé, avantageusement par un registre de fermeture (31) pour diriger l'air soit de l'extérieur dans la chambre (16) et ensuite dans l'espace de la pièce, soit pour diriger l'air du côté refoulement desdits moyens de circulation d'air (22a, 22b; 220a, 220b) vers la chambre (16) et ensuite vers ledit second conduit (12) et vers l'extérieur à partir de ce second conduit.

5. Dispositif de ventilation selon la revendication 4, caractérisé en ce que ladite chambre (14; 16) est munie d'un filtre à air (15).

6. Dispositif de ventilation selon la revendication 4 ou 5, caractérisé en ce que ledit conduit d'admission (11, 12) est muni d'une vanne (13; 17) pour commander la quantité d'air de la pièce qui provient desdits moyens de ventilation (10) et/ou qui en sort.

7. Dispositif de ventilation selon l'une quelconque des revendications 2 à 6, caractérisé en ce que lesdits moyens de circulation d'air (22a, 22b; 220a, 220b) déterminent la circulation de l'air, avantageusement au moyen d'une soufflante.

8. Dispositif de ventilation selon l'une quelconque des revendications 2 à 7, caractérisé en ce que lesdits moyens de transfert de chaleur (18, 19, 20, 190, 200) sont séparés en des premiers moyens de transfert de chaleur, ou moyens inférieurs, (19, 190) et en des seconds moyens de transfert de chaleur, ou moyens supérieurs (20, 200), et en ce que lesdits moyens de transfert de chaleur (18, 19, 20, 190, 200) comprennent des moyens de filtrage.

9. Dispositif de ventilation selon la revendication 7 ou 8, caractérisé en ce que le dispositif comprend un thermostat pouvant être commandé pour brancher la soufflante ou équivalent ou sur lequel est montée une commande pour commander la vitesse de rotation de la soufflante et qui reçoit sa commande de la température de la pièce.

10. Dispositif de ventilation selon l'une quelconque des revendications précédentes 2 à 9, caractérisé en ce qu'un liquide de transfert de chaleur est transporté dans lesdits moyens de transfert de chaleur (18, 19, 20; 190, 200), lesdits moyens de transfert de chaleur étant munis d'un conduit d'arrivée et d'une conduit de sortie et le liquide de transfert de chaleur étant mis en circulation (flèche L₁) par lesdits moyens de transfert de chaleur (18, 19, 20; 190, 200), dans lequel ledit liquide de transfert de chaleur qui circule dans lesdits moyens de transfert de chaleur par leur système de tubes soit transmet l'énergie thermique à l'air se trouvant dans l'espace de la pièce, c'est-à-dire le chauffe, soit prélève l'énergie thermique de l'air de la pièce et refroidit ainsi cet air.

11. Dispositif de ventilation selon l'une quelconque des revendications précédentes 2 à 10, caractérisé en ce que sur le côté admission desdits moyens de circulation d'air (22a, 22b; 220a, 220b) est prévue une ouverture (41) par laquelle l'air de la pièce peut être envoyé en dérivation desdits moyens de transfert de chaleur (18, 19, 20; 190, 200).

12. Dispositif de ventilation selon la revendication 10 ou 11, caractérisé en ce que de l'eau provenant du système d'eau chaude de la maison ou de l'eau provenant du système de radiateurs de la maison est utilisée en tant que liquide de transfert de chaleur.

13. Dispositif de ventilation selon l'une quelconque des revendications 2 à 12, caractérisé en ce que le dispositif comprend un humidificateur d'air (26) de la pièce, comprenant un réservoir d'eau (29), un tuyau d'alimentation d'eau (28) et une surface de filtrage (27) disposée à proximité desdits moyens de transfert de chaleur.

14. Dispositif de ventilation selon l'une quelconque des revendications 2 à 13, caractérisé en ce que le dispositif comprend une lampe de stérilisation (53).

15. Dispositif de ventilation selon l'une quelconque des revendications 4 à 14, caractérisé en ce que le dispositif comprend un tube à chaleur (50) contenant un liquide de transfert de chaleur pour transférer une partie de l'énergie thermique de l'air dans la seconde chambre (16) vers l'air de la première chambre (14).

16. Procédé selon la revendication 1, caractérisé en ce qu'une partie de l'air provenant du côté refoulement desdits moyens de circulation d'air (22a, 22b; 220a, 220b) est séparée de manière à sortir directement de l'espace de la pièce.
